# EUROPÄISCHE PATENTSCHRIFT

(11) **EP 1 332 300 B1**
(45) Veröffentlichungstag und Bekanntmachung des Hinweises auf die Patenterteilung: **12.05.2004**
(21) Anmeldenummer: 01992661.7
(22) Anmeldetag: 19.10.2001
(51) Int. Cl.: F16D 65/21

(54) **ELEKTROMECHANISCH BETÄTIGBARE SCHEIBENBREMSE**
ELECTROMECHANICALLY OPERATED DISK BRAKE
FREIN A DISQUE A COMMANDE ELECTROMAGNETIQUE

(30) Priorität: 03.11.2000 DE 10054474
(43) Veröffentlichungstag der Anmeldung: 06.08.2003
(73) Patentinhaber: PACIFICA GROUP TECHNOLOGIES PTY LTD, Victoria, 3165 (AU)
(72) Erfinder: MOHR, Volker, 93138 Lappersdorf (DE)
(74) Vertreter: Vossius, Volker, Dr.
(86) Internationale Anmeldenummer: PCT/DE2001/003993
(87) Internationale Veröffentlichungsnummer: WO 2002/036398

(56) Entgegenhaltungen:
- EP-A- 0 728 089
- WO-A-99/45292
- DE-A- 19 757 038

## Beschreibung

Die Erfindung betrifft eine elektromechanisch betätigbare Scheibenbremse, bei der der Bremssattel als Schwimmsattel ausgebildet ist. Bei einer solchen Scheibenbremse ist der Schwimmsattel axial verschiebbar an einem Halter gelagert. Die Scheibenbremse weist zwei Bremsbeläge auf, von denen der eine mittels einer im Schwimmsattel angeordneten Betätigungseinheit direkt und der andere Bremsbelag durch die Wirkung einer vom Schwimmsattel aufgebrachten Reaktionskraft mit der zu bremsenden Bremsscheibe in Eingriff bringbar sind. Dabei verschiebt sich der Schwimmsattel relativ zum Halter. Scheibenbremsen sind insbesondere für die Anwendung in Kraftfahrzeugen geeignet.

Eine solche Scheibenbremse ist beispielsweise in EP 0 728 089 offenbart. Die Betätigungseinheit der Scheibenbremse weist einen Elektromotor mit einem Rotor auf, dessen Drehbewegung auf eine Spindelmutter übertragen wird. Die Drehbewegung der Spindelmutter wiederum wird auf ein Betätigungselement, das als Spindel ausgebildet ist, übertragen, so daß das Betätigungselement eine Axialverschiebung erfährt, durch die der der Betätigungseinheit zugeordnete Bremsbelag in Eingriff mit der Bremsscheibe gebracht wird. Der Rotor des Elektromotors ist koaxial um das Betätigungselement angeordnet. Zur Reduktion des vom Elektromotor aufzubringenden erforderlichen Antriebsmoments wird die Drehbewegung des Rotors mittels eines Planetengetriebes auf die Spindelmutter übertragen.

Der Rotor weist einen sehr großen Durchmesser auf, da der Rotor sowohl die Spindel als auch einen Teil des Planetengetriebes umgibt. Dies führt zu Nachteilen in der Dynamik der Scheibenbremse aufgrund der durch den großen Durchmesser des Rotors bedingten größeren rotatorischen Massenträgheitsmomente.

Darüber hinaus bedingt ein großer Durchmesser des Rotors ein großes Volumen der Scheibenbremse. Dies ist nachteilig, da der Raum zur Unterbringung von Bauteilen der Betätigungseinheit um das Betätigungselement herum sehr knapp ist, was im folgenden näher erläutert wird:
1. In axialer Richtung wird der Bauraum durch Fahrwerks- und Karosserieteile und an der gelenkten angetriebenen Achse durch die Antriebswelle begrenzt.
2. Von der Radmitte radial nach außen wird der Bauraum durch die Felge begrenzt. Der Abstand zwischen der Scheibenbremse und der Felge sollte gering sein, da zur Verringerung der benötigten Bremskräfte die Bremsscheibe einen möglich großen Radius aufweisen sollte, und die Scheibenbremse radial möglichst weit außen an die Bremsscheibe angebracht werden sollte.
3. Radial nach innen begrenzen Achsschenkel und das Radlager den Bauraum für die Scheibenbremse.
4. Sattelführungsbolzen des Halters, die in der Regel auf gleichem oder ähnlichem Radius zur Radachse wie das Betätigungselement links und rechts vom Betätigungselement angebracht sind und entlang denen der Schwimmsattel verschiebbar zum Halter gelagert ist, begrenzen ebenfalls den Bauraum für den Elektromotor und für andere Teile der Betätigungseinheit.

Der Erfindung liegt die Aufgabe zugrunde, eine elektromechanisch betätigbare Scheibenbremse anzugeben, die im Vergleich zum Stand der Technik kompakter und bei vergleichbarem Leistungsbedarf und vergleichbarer maximaler Zuspannkraft dynamischer ist.

Die Aufgabe wird gelöst durch eine elektromechanisch betätigbare Scheibenbremse mit einem Schwimmsattel und einem Halter, der mindestens einen Sattelführungsbolzen aufweist, entlang dem der Schwimmsattel verschiebbar gelagert ist. Die Scheibenbremse weist eine Betätigungseinheit auf, die am Schwimmsattel angeordnet ist. Ferner weist die Scheibenbremse einen Elektromotor mit einem Rotor, ein Betätigungselement zum Verschieben eines Bremsbelags gegenüber dem Schwimmsattel und ein Mittel zum Umwandeln der Drehbewegung des Rotors in eine Linearbewegung des Betätigungselements bezüglich des Schwimmsattels auf. Zumindest ein axialer Teilbereich des Rotors des Elektromotors ist koaxial um den Sattelführungsbolzen angebracht. Der Elektromotor ist also parallel zum Betätigungselement angeordnet.

Der bereits für den Sattelführungsbolzen erforderliche Bauraum für die Scheibenbremse wird doppelt ausgenutzt, indem der Rotor des Elektromotors zumindest teilweise koaxial um diesen Sattelführungsbolzen angebracht ist. Für den Elektromotor ist also kein oder nur ein kleiner zusätzlicher Bauraum erforderlich. Da der Sattelführungsbolzen in der Regel einen im Vergleich zum Betätigungselement kleinen Durchmesser aufweist, kann der Rotor des Elektromotors gleichfalls einen kleinen Durchmesser aufweisen.

Da das Betätigungselement und der Elektromotor nicht axial hintereinander, d. h. entlang der Richtung, entlang der das Betätigungselement verschoben werden kann, angeordnet sind, weist die Scheibenbremse eine geringe axiale Baulänge auf.

Die Scheibenbremse ist folglich sehr kompakt und dynamisch.

Für einen besonders hohen Wirkungsgrad der Scheibenbremse ist es vorteilhaft, wenn mindestens ein Teil des Betätigungselements und ein Teil des Mittels zum Umwandeln der Drehbewegung des Rotors in eine Linearbewegung des Betätigungselements ein Spindelgetriebe, das eine Spindelmutter und eine Spindel aufweist, bilden. Das Mittel zum Umwandeln der Drehbewegung des Rotors in eine Linearbewegung des Betätigungselements ist dann derart ausgelegt, dass die Drehbewegung des Rotors auf das Spindelgetriebe übertragen wird. Aufgrund von Wälzkörpern im Spindelgetriebe und der damit verbundenen Substitution der Gleitreibung durch Rollreibung entstehen bei der Betätigung der Scheibenbremse weniger Reibungsverluste innerhalb der Betätigungseinheit.

Alternativ bilden mindestens ein Teil des Betätigungselements und ein Teil des Mittels zum Umwandeln der Drehbewegung des Rotors in eine Linearbewegung des Betätigungselements ein Bewegungsgewinde bestehend aus Schraube und Mutter.

Für eine besonders gute Übertragung der Kraft des Elektromotors auf das Betätigungselement ist es vorteilhaft, wenn das Mittel zum Umwandeln der Drehbewegung des Rotors in eine Linearbewegung des Betätigungselements ein mindestens einstufiges Stirnradgetriebe aufweist. Ein Planetengetriebe mit schlechterem Wirkungsgrad und weniger geometrischen Freiheitsgraden in der Anordnung von Motor und Betätigungselement zueinander ist nicht erforderlich, da das Betätigungselement und der Rotor nicht um dieselbe Achse angeordnet sind.

Alternativ weist das Mittel zum Umwandeln der Drehbewegung des Rotors in eine Linearbewegung des Betätigungselements z. B. ein Zugmittelgetriebe mit Kette oder Riemen oder ein Reibradgetriebe auf.

Beispielsweise weist das Mittel zum Umwandeln der Drehbewegung des Rotors in eine Linearbewegung des Betätigungselements ein Rotorzahnrad auf, der am Rotor befestigt ist. Ferner kann das o. g. Mittel mindestens ein erstes Zwischenzahnrad und ein zweites Zwischenzahnrad aufweisen. Das erste Zwischenzahnrad und das zweite Zwischenzahnrad sind auf derselben Zwischenwelle angeordnet und drehfest miteinander verbunden. Das erste Zwischenzahnrad weist einen größeren Außendurchmesser auf als das zweite Zwischenzahnrad und greift in das Rotorzahnrad ein, während das zweite Zwischenzahnrad in Mitnahmeverbindung mit dem Spindelgetriebe steht. Durch das dadurch gebildete Untersetzungsgetriebe wird eine erhebliche Reduzierung des vom Elektromotor aufzubringenden erforderlichen Antriebsmoments erzielt.

Beispielsweise greift das zweite Zwischenzahnrad in ein Spindelzahnrad ein, das mit der Spindel verbunden ist. In diesem Fall bildet die Spindelmutter mindestens einen Teil des Betätigungselements. Das Betätigungselement kann einen weiteren Teil aufweisen, der als Bremskolben ausgebildet ist, mit der Spindelmutter verbunden oder einstückig mit ihr ausgebildet ist, und auf den Bremsbelag wirkt.

Alternativ bildet die Spindel einen Teil des Betätigungselements. In diesem Fall wird die Drehbewegung des Rotors auf die Spindelmutter übertragen.

Die Scheibenbremse kann eine Feststellbremsanlage umfassen. Dazu weist das Mittel zum Umwandeln der Drehbewegung des Rotors in eine Linearbewegung des Betätigungselements beispielsweise mindestens ein Sperrrad mit mindestens einer Ausnehmung, die in einem endlichen Abstand von der Achse des Sperrrads angeordnet ist, auf. Das Mittel zum Umwandeln der Drehbewegung des Rotors in eine Linearbewegung des Betätigungselements ist derart ausgelegt, dass ein Verriegeln des Sperrrads einen Stillstand des Betätigungselements bezüglich des Schwimmsattels zur Folge hat. Die Feststellbremsanlage weist einen Betätigungsmechanismus und einen Auslöser zum Auslösen des Betätigungsmechanismus auf, wobei der Betätigungsmechanismus derart ausgebildet ist, dass er zum mechanischen Verriegeln des Sperrrads in die Ausnehmung des Sperrrads eingreift.

Das Sperrrad kann mehrere radial verteilte Ausnehmungen aufweisen.

Zur Reduktion des Platzbedarfs der Scheibenbremse ist es vorteilhaft, wenn das Sperrrad ein Zahnrad des Stirnradgetriebes ist. Es ist also kein zusätzliches Rad für die Feststellbremsanlage erforderlich.

Besonders vorteilhaft ist es, wenn die Ausnehmung des Sperrrads durch zwei zueinander benachbarte Zähne des Zahnrads des Stirnradgetriebes gebildet wird. In diesem Fall erfordert das Zahnrad zur Bildung der Ausnehmung keine besondere Ausformung, da bereits vorhandene Zähne verwendet werden.

Die Scheibenbremse kann derart ausgelegt sein, dass das Betätigungselement von einer Position ausgehend, die das Betätigungselement bei starken Bremsen einnimmt, bei abgeschalteten Elektromotor und bei nicht ausgelöster Feststellbremsanlage sich in eine Position verlagert, die das Betätigungselement bei schwächerem oder keinem Bremsen einnimmt, so dass sich das Zahnrad während der oben genannten Verlagerung des Betätigungselements in eine erste Drehrichtung dreht. Der Betätigungsmechanismus der Feststellbremsanlage weist eine drehbar gelagerte Sperrklinke zum Eingreifen zwischen die Zähne des Zahnrads auf. Die Sperrklinke ist derart relativ zum Zahnrad angeordnet, dass die erste Drehrichtung des Zahnrads entgegengesetzt zur Drehrichtung der Sperrklinke zum Sperren des Zahnrads ist. Die Sperrklinke wird durch das in die erste Drehrichtung des Zahnrades wirkende Drehmoment energielos im ausgelösten Zustand der Feststellbremse gehalten.

Der Elektromotor kann als partieller Hohlwellenmotor ausgebildet sein. Dazu ist ein erster Teil des Rotors koaxial um den Sattelführungsbolzen angebracht. Ein zweiter Teil des Rotors ist axial versetzt zum Sattelführungsbolzen angeordnet. Da der zweite Teil des Rotors nicht koaxial um den Sattelführungsbolzen sondern in Führungsrichtung des Sattelführungsbolzen axial versetzt angeordnet ist, kann er einen kleineren Außendurchmesser aufweisen als der erste Teil des Rotors.

Folglich kann das Rotorzahnrad, wenn es am zweiten Teil des Rotors befestigt ist, einen kleineren Außendurchmesser aufweisen als der erste Teil des Rotors. Aufgrund des kleinen Rotorzahnrads kann das Stirnradgetriebe eine bessere Übersetzung ins Langsame aufweisen, wodurch der Elektromotor eine größere Kraft auf das Betätigungselement ausüben kann.

Der Halter weist beispielsweise einen weiteren Sattelführungsbolzen auf. Zur Reduktion des Platzbedarfs der Scheibenbremse bei zugleich hoher Stabilität der Lagerung des Schwimmsattels ist es vorteilhaft, wenn die axiale Länge des weiteren Sattelführungsbolzens etwa der Summe der axialen Länge des Sattelführungsbolzens und der axialen Länge des zweiten Teils des Rotors entspricht.

Alternativ ist der Elektromotor als reiner Hohlwellenmotor ausgestaltet. In diesem Fall ist der Rotor über seine gesamte axiale Länge koaxial um den Sattelführungsbolzen angebracht.

Zur Erhöhung der Bremskraft der Scheibenbremse ist es vorteilhaft, die Scheibenbremse zweikolbig auszubilden. In diesem Fall weist die Scheibenbremse eine weitere Betätigungseinheit auf, die einen weiteren Elektromotor und ein weiteres Betätigungselement zum Verschieben des Bremsbelags gegenüber dem Schwimmsattel aufweist. Das Betätigungselement und das weitere Betätigungselement wirken auf denselben Bremsbelag.

Zur Reduktion des Platzbedarfs der Scheibenbremse ist es vorteilhaft, wenn die weitere Betätigungseinheit analog zur Betätigungseinheit aufgebaut ist, und der Rotor des weiteren Elektromotors zumindest teilweise koaxial um den weiteren Sattelführungsbolzen angebracht ist.

Beispielsweise sind das Betätigungselement und das weitere Betätigungselement zwischen dem Sattelführungsbolzen und dem weiteren Sattelführungsbolzen angeordnet. Die Scheibenbremse kann um eine Ebene, die zwischen dem Betätigungselement und dem weiteren Betätigungselement verläuft, im wesentlichen symmetrisch aufgebaut sein.

Durch die parallele Anordnung des Elektromotors, des Stirnradgetriebes und des Betätigungselements ist es möglich, die gesamte Betätigungseinheit der Scheibenbremse an einen Deckel des Schwimmsattels zu montieren. Dies ist vorteilhaft, da alle Funktionen einer solchen Betätigungseinheit noch vor dem Anbringen des Deckels an den übrigen Teil des Schwimmsattels leicht geprüft werden können. Eine solche Betätigungseinheit bildet eine vorab prüfbare Vormontageeinheit.

Auch die Montage der Scheibenbremse wird vereinfacht, da beispielsweise lediglich zwei Gehäuseteile, nämlich der Deckel und der übrige Teil des Schwimmsattels, miteinander verbunden werden müssen.

Darüber hinaus sind die stromführenden Teile des Betätigungselements nicht quer innerhalb der Scheibenbremse verstreut sondern am Deckel montiert, so daß sie mit kurzen und statischen Leitungen verbunden und kontaktiert werden können. Die Montage der stromführenden Teile erfolgt aus derselben Richtung, so das die Montagelinie bei der Herstellung der Scheibenbremse weniger komplex und folglich kostengünstiger ist.

Stromführende Teile sind beispielsweise der Stator des Elektromotors und die Sensorik. Die Sensorik besteht in der Regel mindestens aus einem Kraftsensor, der die beim Bremsen an der Bremsscheibe anliegende Kraft messen soll. Diese Messung erfolgt beispielsweise durch Feststellung einer Längenänderung von piezoelektrischem Material, das zwischen dem Lager der Spindel und dem Schwimmsattel angeordnet ist. Da weder der Elektromotor noch ein Getriebe axial hinter dem Betätigungselement angeordnet ist, kann der Kraftsensor direkt am Deckel montiert werden. Zur Sensorik kann ferner ein Elektromotorrotorlagegeber gehören. Da der Elektromotor in der Nähe des Deckels angeordnet sein kann, kann dieser Lagegeber ebenfalls am Deckel oder direkt auf einer elektronischen Regelungseinheit angebracht werden. Die Regelungseinheit kann am Deckel angebracht sein. Die Regelungseinheit kann z.B. eine Platine sein oder in Hybridtechnologie hergestellt sein.

Im folgenden werden Ausführungsbeispiele der Erfindung anhand der Figuren näher erläutert.

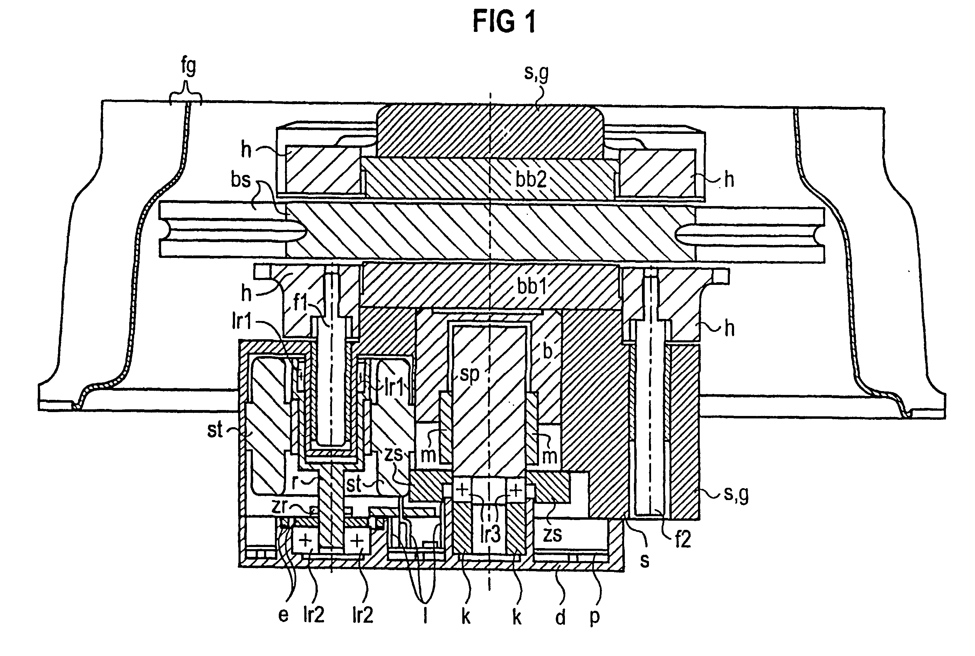

- Figur 1: zeigt einen Querschnitt durch eine erste Scheibenbremse mit einem Schwimmsattel, einem Halter, einem Bremsbelag, einem weiteren Bremsbelag, einer Felge, einem Bremskolben, einer Spindelmutter, einer Spindel, einem Stator, einem Rotor, einem Rotorzahnrad, einem Spindelzahnrad, einem Sattelführungsbolzen, einem weiteren Sattelführungsbolzen, einem ersten Lager für den Rotor, einem zweiten Lager für den Rotor, einem Lager für die Spindel, einem Elektromotorrotorlagegeber, einem Kraftsensor, elektrischen Leitungen und einer Platine. Ferner ist eine zu bremsende Bremsscheibe dargestellt.

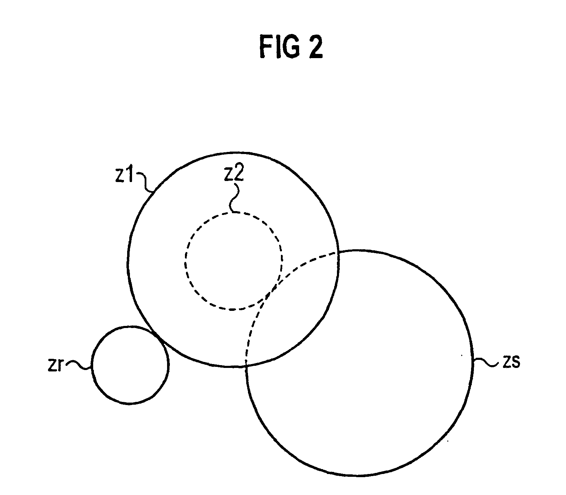

- Figur 2: zeigt eine schematische Seitenansicht eines Stirnradgetriebes der ersten Scheibenbremse mit dem Rotorzahnrad, dem Spindelzahnrad, einem ersten Zwischenzahnrad und einem zweiten Zwischenzahnrad.

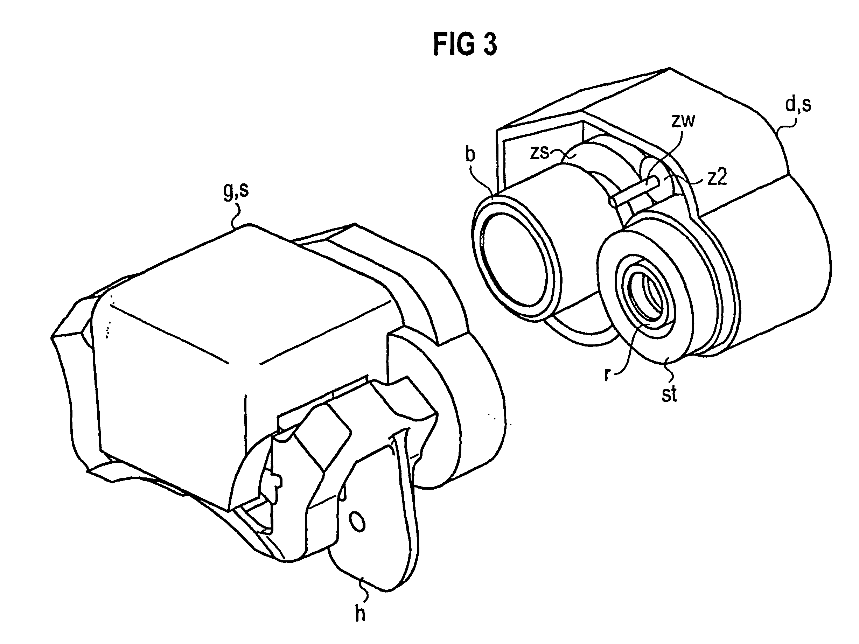

- Figur 3: zeigt eine Explosionsdarstellung der ersten Scheibenbremse, in der ein Gehäuseteil des Schwimmsattels, der Halter, der Stator, der Rotor, der Bremskolben, eine Zwischenwelle des ersten Zwischenzahnrads und des zweiten Zwischenzahnrads, das zweite Zwischenzahnrad und ein Deckel gezeigt sind.

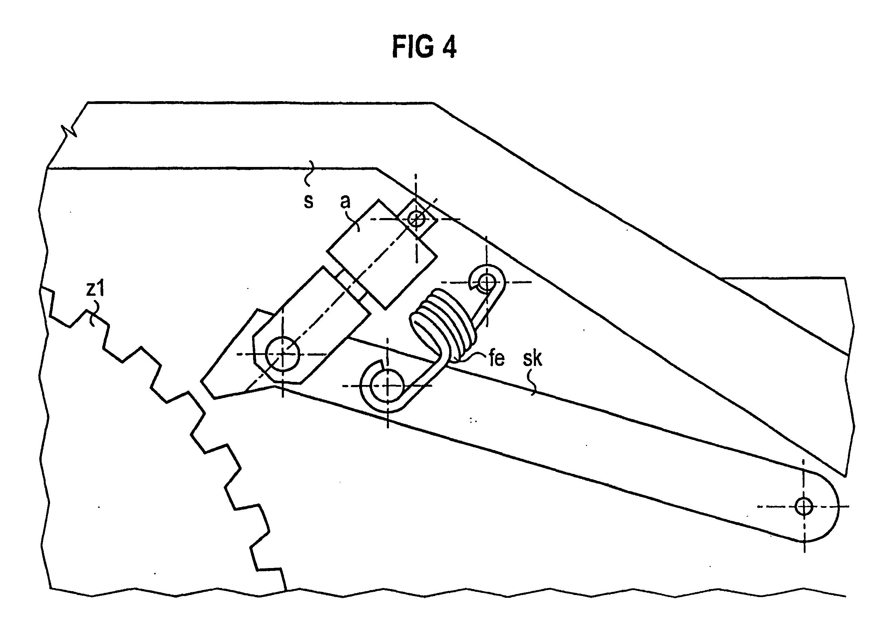

- Figur 4: zeigt eine Seitenansicht eines Teils der ersten Scheibenbremse, in der das erste Zwischenzahnrad und eine Feststellbremsanlage bestehend aus einer Sperrklinke, einer Feder und einem Auslöser dargestellt sind.

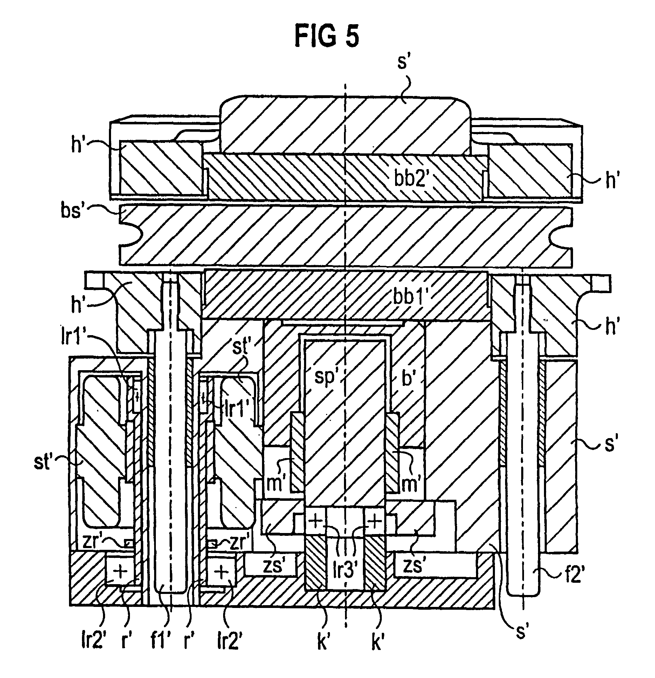

- Figur 5: zeigt einen Querschnitt durch eine zweite Scheibenbremse mit einem Schwimmsattel, einem Halter, einem Bremsbelag, einem weiteren Bremsbelag, einer Felge, einem Bremskolben, einer Spindelmutter, einer Spindel, einem Stator, einem Rotor, einem Rotorzahnrad, einem Kraftsensor, einem Spindelzahnrad, einem Sattelführungsbolzen, einem weiteren Sattelführungsbolzen, einem ersten Lager für den Rotor, einem zweiten Lager für den Rotor und einem Lager für die Spindel.

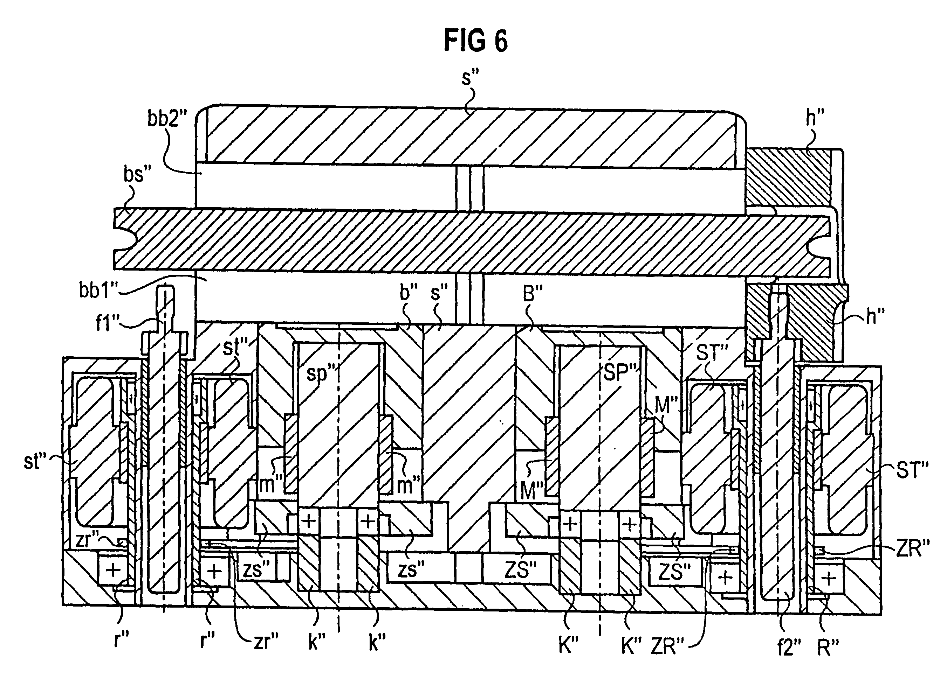

- Figur 6: zeigt einen Querschnitt durch eine dritte Scheibenbremse mit einem Schwimmsattel, einem Halter, einem Bremsbelag, einem weiteren Bremsbelag, einer Felge, zwei Bremskolben, zwei Spindelmuttern, zwei Spindeln, zwei Statoren, zwei Rotoren, zwei Rotorzahnräder, zwei Kraftsensoren, zwei Spindelzahnräder, einem Sattelführungsbolzen und einem weiteren Sattelführungsbolzen.

In einem ersten Ausführungsbeispiel ist eine erste Scheibenbremse vorgesehen, die einen Schwimmsattel s und einen Halter h aufweist. Der Halter h weist einen Sattelführungsbolzen f1 und einen weiteren Sattelführungsbolzen f2 auf, entlang denen der Schwimmsattel s verschiebbar gelagert ist (siehe Figur 1).

Die erste Scheibenbremse weist eine Betätigungseinheit auf, die in einem Deckel d des Schwimmsattels s montiert ist. Die Betätigungseinheit weist einen Elektromotor auf mit einem Rotor r und einem Stator st. Ein erster Teil des Rotors r ist koaxial um den Sattelführungsbolzen f1 angebracht (siehe Figur 1). Ein zweiter Teil des Rotors r, der an den ersten Teil des Rotors r angrenzt, ist axial versetzt zum Sattelführungsbolzen f1 angeordnet. Der zweite Teil des Rotors r weist einen kleineren Außendurchmesser auf, als der erste Teil des Rotors r. Am zweiten Teil des Rotors r ist ein Rotorzahnrad zr angebracht, der einen kleineren Außendurchmesser aufweist als der erste Teil des Rotors r (siehe Figur 1).

Der Stator st des Elektromotors ist um den Rotor r angeordnet und mit dem Schwimmsattel s fest verbunden.

Der erste Teil des Rotors r ist an einem ersten Lager lr1 gelagert, während der zweite Teil des Rotors r an einem zweiten Lager lr2 gelagert ist.

Die Betätigungseinheit weist ein Betätigungselement bestehend aus einer Spindelmutter m und einem Bremskolben b auf. Die Spindelmutter m ist mit dem Bremskolben b fest verbunden. Der Bremskolben b grenzt an einen Bremsbelag bb1 an. Das Betätigungselement dient dem Verschieben des Bremsbelags bb1 gegenüber dem Schwimmsattel s.

Die Betätigungseinheit weist ferner ein Mittel zum Umwandeln der Drehbewegung des Rotors r in eine Linearbewegung des Betätigungselements bezüglich des Schwimmsattels s auf. Dieses Mittel besteht aus einer Spindel sp und einem zweistufigen Stirnradgetriebe, zu dem das Rotorzahnrad zr gehört. Das Stirnradgetriebe besteht ferner aus einem Spindelzahnrad zs, das mit der Spindel sp verbunden ist, einem ersten Zwischenzahnrad z1 und einem zweiten Zwischenzahnrad z2. Der Übersichtlichkeit halber sind das erste Zwischenzahnrad z1 und das zweite Zwischenzahnrad z2 in der Figur 1 nicht dargestellt. Das erste Zwischenzahnrad z1 und das zweite Zwischenzahnrad z2 sind an derselben Zwischenwelle zw angeordnet (siehe Figur 2). Das erste Zwischenzahnrad z1 weist einen größeren Außendurchmesser auf als das zweite Zwischenzahnrad z2 und als das Rotorzahnrad zr und greift in das Rotorzahnrad zr ein. Das zweite Zwischenzahnrad z2 greift in das Spindelzahnrad zs ein.

Der Schwimmsattel s weist einen Vorsprung auf, an den ein weiterer Bremsbelag bb2 angrenzt. Eine zu bremsende Bremsscheibe bs wird zwischen den Bremsbelag bb1 und dem weiteren Bremsbelag bb2 angeordnet. Zum Bremsen der Bremsscheibe bs wird der Elektromotor derart angesteuert, dass aufgrund der Drehbewegung des Rotors r die Spindelmutter m und der Bremskolben b Richtung Bremsscheibe bs verschoben werden. Dadurch wird der Bremsbelag bb1 ebenfalls Richtung Bremsscheibe bs bewegt. Aufgrund der Kraft, die die Bremsscheibe bs auf den Bremsbelag bb1 ausübt, wird der Schwimmsattel s entlang dem Sattelführungsbolzen f1 und dem weiteren Sattelführungsbolzen f2 bezüglich dem Halter h verschoben, wodurch der Vorsprung des Schwimmsattels s und dadurch der weitere Bremsbelag bb2 ebenfalls Richtung Bremsscheibe bs verschoben werden. Dadurch wirkt die Bremskraft gleichmäßig auf beide Seiten der Bremsscheibe bs. In Figur 1 ist die Bremsscheibe bs nicht nur im Querschnitt dargestellt, sondern auch eine dreidimensionale Teilansicht der Bremsscheibe bs.

Die Scheibenbremse ist innerhalb einer Felge fg angeordnet, die in Figur 1 teilweise dreidimensional dargestellt ist.

Die Scheibenbremse weist zur Regelung des Elektromotors eine Platine p auf, die an einem Deckel d montiert ist (siehe Figur 1). Ein Kraftsensor k zum Messen der Kraft, die die Scheibenbremse auf die Bremsscheibe bs ausübt, ist am Deckel d montiert und grenzt an ein Lager lr3 der Spindel sp an. Der Kraftsensor k misst somit die Kraft, die die Spindel sp auf den Deckel d ausübt, wobei die Kraft von der Bremsscheibe bs auf den Bremskolben b, vom Bremskolben b auf die Spindelmutter m und von dort auf die Spindel sp übertragen wird.

Ebenfalls mit dem Deckel d verbunden ist ein Elektromotorrotorlagegeber e, der die Drehung des Rotors r erfasst und zur Platine p leitet. Elektrische Leitungen 1 zum Stator st des Elektromotors sind mit der Platine p verbunden.

Das Lager lr2, in dem der Rotor r gelagert ist, und das Lager lr3, in dem die Spindel sp gelagert ist, sind am Deckel d montiert. Auch die Zwischenwelle zw ist am Deckel d gelagert.

Somit ist die gesamte Betätigungseinheit am Deckel montiert. Die Spindelmutter m mit dem Bremskolben b kann um die Spindel sp geschraubt werden, so daß die Spindelmutter m und der Bremskolben b ebenfalls letzten Endes am Deckel d montiert sind.

Der Deckel d ist mit dem übrigen Teil g des Schwimmsattels s verschraubt.

Die Scheibenbremse weist eine Feststellbremsanlage auf, die aus einer am Schwimmsattel s gelagerte Sperrklinke sk, einer Feder fe und einem Auslöser a besteht. Der Auslöser a ist als Elektrohubmagnet ausgebildet und am Schwimmsattel s sowie am nichtgelagerten Ende der Sperrklinke sk befestigt. Bei nicht betätigtem Auslöser a hält die Feder fe die Sperrklinke sk vom ersten Zwischenzahnrad z1 zurück. Wird der Auslöser a betätigt, so wird die Sperrklinke sk vom Schwimmsattel s entgegen der Federkraft se weg gedreht und greift mit seinem nicht am Schwimmsattel s gelagerten Ende zwischen die Zähne des ersten Zwischenzahnrads z1 ein. Wirkt auf das erste Zwischenzahnrad z1 ein Drehmoment, das eine Drehung des ersten Zwischenzahnrads z1 in eine Drehrichtung entgegengesetzt zu der Drehrichtung der Sperrklinke sk beim Sperren bewirken würde, so wird das erste Zwischenzahnrad z1 mechanisch verriegelt. Die Sperrklinke sk kann in diesem Fall auch nach Ausschalten des Auslösers a nicht in seine Ausgangsposition zurückkehren. Erst wenn auf das erste Zwischenzahnrad z1 ein Drehmoment wirkt, das eine Drehung des ersten Zwischenzahnrads mit einer Drehrichtung, die gleich der Drehrichtung der Sperrklinke sk beim Sperren ist, bewirkt, wird die Sperrklinke sk gelöst und kehrt aufgrund der Zugkraft der Feder fe wieder in seine Ausgangsposition zurück (siehe Figur 4).

Die Scheibenbremse ist derart ausgelegt, dass der Bremskolben b von einer Position ausgehend, die der Bremskolben b bei starken Bremsen einnimmt, bei abgeschaltetem Elektromotor und bei nicht ausgelöster Feststellbremsanlage sich in eine Position verlagert, die der Bremskolben b bei schwächerem oder bei keinem Bremsen einnimmt, so dass sich das erste Zwischenzahnrad z1 während der oben genannten Verlagerung des Bremskolbens b in eine Drehrichtung dreht, die entgegengesetzt zur Drehrichtung der Sperrklinke sk beim Sperren des ersten Zwischenzahnrads z1 ist. Die Scheibenbremse ist also nicht selbsthemmend ausgelegt.

In einem zweiten Ausführungsbeispiel ist eine an einer Bremsscheibe bs' angeordnete zweite Scheibenbremse vorgesehen mit einem Schwimmsattel s', Bremsbelägen bb1', bb2', einem Bremskolben b', einer Spindelmutter m', einer Spindel sp', einem Spindelzahnrad zs', einem ersten Zwischenzahnrad, einem zweiten Zwischenzahnrad, einem Rotorzahnrad zr', einem Kraftsensor k' einem Stator st', einem Halter h', einem Sattelführungsbolzen f1', einem weiteren Sattelführungsbolzen f2' und Lager lr1', lr2', lr3', die analog zum ersten Ausführungsbeispiel angeordnet sind (siehe Figur 5). Wie im ersten Ausführungsbeispiel sind auch eine Platine, Leitungen und ein E-lektromotorrotorlagegeber vorgesehen, die der Einfachheit halber jedoch in der Figur 5 nicht dargestellt sind. Im Gegensatz zum ersten Ausführungsbeispiel ist der erste Sattelführungsbolzen f1' genauso lang wie der weitere Sattelführungsbolzen f2'. Der Rotor r' des Elektromotors ist im Gegensatz zum ersten Ausführungsbeispiel über seine gesamte axiale Länge koaxial um den Sattelführungsbolzen f1' angeordnet.

In einem dritten Ausführungsbeispiel ist eine an einer Bremsscheibe bs'' angeordnete dritte Scheibenbremse vorgesehen, die wie die erste Scheibenbremse des ersten Ausführungsbeispiels einen Halter h'' mit einem Sattelführungsbolzen f1'' und einem weiteren Sattelführungsbolzen f2'' und einen Schwimmsattel s'' aufweist (siehe Figur 6). Auch weist die dritte Scheibenbremse, wie die erste Scheibenbremse des ersten Ausführungsbeispiels, einen Elektromotor, ein Betätigungselement und ein Mittel zum Umwandeln der Drehbewegung des Rotors r'' des Elektromotors in eine Linearbewegung des Betätigungselements. Das Betätigungselement weist einen Bremskolben b'' und eine Spindelmutter m'' auf. Der Elektromotor weist einen Rotor r'' und einen Stator st'' auf. Das Mittel zum Umwandeln der Drehbewegung des Rotors r'' in eine Linearbewegung des Betätigungselements weist ein Rotorzahnrad zr'', ein erstes Zwischenzahnrad, ein zweites Zwischenzahnrad, ein Spindelzahnrad zs'' und eine Spindel sp'' auf. Im Schwimmsattel s'' sind ein Bremsbelag bb1'' und ein weiterer Bremsbelag bb2'' angeordnet. Es ist ein Kraftsensor k'' vorgesehen.

Im Gegensatz zum ersten Ausführungsbeispiel weist jedoch die dritte Scheibenbremse ein weiteres Betätigungselement, das analog zum Betätigungselement aufgebaut ist, einen weiteren Elektromotor, der analog zum Elektromotor aufgebaut ist, und ein weiteres Mittel zum Umwandeln der Drehbewegung des Rotors R'' des weiteren Elektromotors in eine Linearbewegung des weiteren Betätigungselements. Das weitere Betätigungselement weist also einen Bremskolben B'', und eine Spindelmutter M'' auf. Der weitere Elektromotor weist einen Stator ST'' auf. Das Mittel zum Umwandeln der Drehbewegung des Rotors R'' des weiteren Elektromotors in eine Linearbewegung des weiteren Betätigungselements weist ein Rotorzahnrad ZR", ein erstes Zwischenzahnrad, ein zweites Zwischenzahnrad und ein Spindelzahnrad ZS'' auf, an dem ein weiterer Kraftsensor K'' angrenzt.

Der Rotor R'' des weiteren Elektromotors ist koaxial um den weiteren Sattelführungsbolzen f2'' angeordnet (siehe Figur 6). Das Betätigungselement und das weitere Betätigungselement sind zwischen dem Sattelführungsbolzen f1'' und dem weiteren Sattelführungsbolzen f2'' angeordnet. Die Scheibenbremse ist um eine Ebene, die zwischen dem Betätigungselement und dem weiteren Betätigungselement verläuft, im Wesentlichen symmetrisch aufgebaut.

## Patentansprüche

1. Elektromechanisch betätigbare Scheibenbremse
- mit einem Schwimmsattel (s) und einem Halter (h), der mindestens einen Sattelführungsbolzen (f1) aufweist, entlang der der Schwimmsattel (s) verschiebbar gelagert ist,
- mit einer Betätigungseinheit, die am Schwimmsattel (s) angeordnet ist,
- wobei die Betätigungseinheit einen Elektromotor mit einem Rotor (r), ein Betätigungselement zum Verschieben eines Bremsbelags (bb1) gegenüber dem Schwimmsattel (s) und ein Mittel zum Umwandeln der Drehbewegung des Rotors (r) in eine Linearbewegung des Betätigungselements bezüglich des Schwimmsattels (s) aufweist und
- wobei zumindest ein axialer Teilbereich des Rotors (r) des Elektromotors koaxial um den Sattelführungsbolzen (f1) angebracht ist.

2. Scheibenbremse nach Anspruch 1,
- bei der mindestens ein Teil des Betätigungselements und ein Teil des Mittels zum Umwandeln der Drehbewegung des Rotors (r) in eine Linearbewegung des Betätigungselements ein Spindelgetriebe bestehend aus Spindelmutter (m) und Spindel (sp) bilden,
- bei der das Mittel zum Umwandeln der Drehbewegung des Rotors (r) in eine Linearbewegung des Betätigungselements derart ausgelegt ist, daß die Drehbewegung des Rotors (r) auf das Spindelgetriebe übertragen wird.

3. Scheibenbremse nach einem der Ansprüche 1 bis 2,
- bei der das Mittel zum Umwandeln der Drehbewegung des Rotors (r) in eine Linearbewegung des Betätigungselements ein Stirnradgetriebe aufweist.

4. Scheibenbremse nach Anspruch 2 und 3,
- bei der das Mittel zum Umwandeln der Drehbewegung des Rotors (r) in eine Linearbewegung des Betätigungselements ein Rotorzahnrad (zr) aufweist, das am Rotor (r) befestigt ist,
- bei der das Mittel zum Umwandeln der Drehbewegung des Rotors (r) in eine Linearbewegung des Betätigungselements mindestens ein erstes Zwischenzahnrad (z1) und ein zweites Zwischenzahnrad (z2) aufweist,
- bei der das erste Zwischenzahnrad (z1) und das zweite Zwischenzahnrad (z2) auf derselben Zwischenwelle (zw) angeordnet sind,
- bei der das erste Zwischenzahnrad (z1) einen größeren Außendurchmesser aufweist als das zweite Zwischenzahnrad (z2) und in das Rotorzahnrad (zr) eingreift,
- bei der das zweite Zwischenzahnrad (z2) in Mitnahmeverbindung mit dem Spindelgetriebe steht.

5. Scheibenbremse nach einem der Ansprüche 1 bis 4,
- bei der das Mittel zum Umwandeln der Drehbewegung des Rotors (r) in eine Linearbewegung des Betätigungselements mindestens ein Sperrrad mit mindestens einer Ausnehmung aufweist, die in einem endlichen Abstand von der Sperrradachse angeordnet ist,
- bei der das Mittel zum Umwandeln der Drehbewegung des Rotors (r) in eine Linearbewegung des Betätigungselements derart ausgelegt ist, daß ein Verriegeln des Sperrrads einen Stillstand des Betätigungselements bezüglich des Schwimmsattels (s) zur Folge hat,
- mit einer Feststellbremsanlage, die einen Betätigungsmechanismus und einen Auslöser (a) zum Auslösen des Betätigungsmechanismus aufweist,
- bei der der Betätigungsmechanismus derart ausgebildet ist, daß er zum mechanischen Verriegeln des Sperrrads in die Ausnehmung des Sperrrads eingreift.

6. Scheibenbremse nach Anspruch 5 und einem der Ansprüche 3 oder 4,
- bei der das Sperrrad ein Zahnrad des Stirnradgetriebes ist,
- bei der die Ausnehmung des Sperrrads durch zwei zueinander benachbarte Zähne des Zahnrads gebildet ist.

7. Scheibenbremse nach Anspruch 6,
- die derart ausgelegt ist, daß das Betätigungselement von einer Position ausgehend, die das Betätigungselement bei starkem Bremsen einnimmt, bei abgeschaltetem Elektromotor und bei nicht ausgelöster Feststellbremsanlage sich in eine Position verlagert, die das Betätigungselement bei schwächerem oder keinem Bremsen einnimmt, so daß sich das Zahnrad während der obengenannten Verlagerung des Betätigungselements in eine erste Drehrichtung dreht,
- bei der der Betätigungsmechanismus der Feststellbremsanlage eine drehbar gelagerte Sperrklinke (sk) zum Eingreifen zwischen die Zähne des Zahnrads aufweist,
- bei der die Sperrklinke (sk) derart relativ zum Zahnrad angeordnet ist, daß die erste Drehrichtung des Zahnrads entgegengesetzt zur Drehrichtung der Sperrklinke (sk) zum Sperren des Zahnrads ist.

8. Scheibenbremse nach einem der Ansprüche 1 bis 7,
- bei der ein erster Teil des Rotors (r) koaxial um den Sattelführungsbolzen angebracht ist,
- bei der ein zweiter Teil des Rotors (r) axial versetzt zum Sattelführungsbolzen angeordnet ist,
- bei der der Außendurchmesser des zweiten Teils des Rotors (r) kleiner ist als der Außendurchmesser des ersten Teils des Rotors (r) ist,
- bei der das Mittel zum Umwandeln der Drehbewegung des Rotors (r) in eine Linearbewegung des Betätigungselements ein Rotorzahnrad (zr) aufweist, das am zweiten Teil des Rotors (r) befestigt ist,
- bei der der Außendurchmesser des Rotorzahnrads (zr) kleiner ist als der Außendurchmesser des ersten Teils des Rotors (r).

9. Scheibenbremse nach Anspruch 8,
- bei der der Halter (h) einen weiteren Sattelführungsbolzen (f2) aufweist, dessen axiale Länge etwa der Summe der axialen Länge des Sattelführungsbolzens und der axialen Länge des zweiten Teils des Rotors (r) entspricht.

10. Scheibenbremse nach einem der Ansprüche 1 bis 9,
- wobei der Rotor (r') über seine gesamte axiale Länge koaxial um den Sattelführungsbolzen (f1') angebracht ist.

11. Scheibenbremse nach einem des Ansprüche 1 bis 10,
- mit einem weiteren Sattelführungsbolzen (f2'') und einer weiteren Betätigungseinheit, die am Schwimmsattel (s") angeordnet ist,
- wobei die weitere Betätigungseinheit einen weiteren Elektromotor und ein Betätigungselement zum Verschieben des Bremsbelags gegenüber dem Schwimmsattel (s'') aufweist und analog zur Betätigungseinheit aufgebaut ist,
- wobei der Rotor (R'') des weiteren Elektromotors zumindest teilweise koaxial um den weiteren Sattelführungsbolzen (f2'') angebracht ist.

12. Scheibenbremse nach Anspruch 11,
- bei der das Betätigungselement und das weitere Betätigungselement zwischen dem Sattelführungsbolzen (f1'') und dem weiteren Sattelführungsbolzen (f2'') angeordnet sind,
- bei der die Scheibenbremse um eine Ebene, die zwischen dem Betätigungselement und dem weiteren Betätigungselement verläuft, im wesentlichen symmetrisch aufgebaut ist.

13. Scheibenbremse nach einem der Ansprüche 1 bis 12,
- bei der eine Sensorik, der Elektromotor, das Mittel zum Umwandeln der Drehbewegung des Rotors (r) in eine Linearbewegung des Betätigungselements und eine Regelungseinheit an einem Deckel (d) montiert sind,
- bei der der Deckel (d) an dem Schwimmsattel (s) montiert ist.

## Claims

1. Electromechanically operated disk brake comprising
a floating calliper (s) and a support (h) comprising at least one calliper guiding pin (f1), wherein said floating calliper (s) is displaceably supported along said calliper guiding pin,
an actuation unit positioned at said floating calliper (s),
wherein said actuation unit comprises an electric motor having a rotor (r), an actuation member for displacing a brake pad (bb1) relative to said floating calliper (s) and means for transforming the rotary motion of said rotor (r) into a linear motion of said actuation member relative to said floating calliper (s), and
wherein at least an axial portion of said rotor (r) of said electric motor is mounted coaxially about said calliper guiding pin (f1).

2. Disk brake according to claim 1,
wherein at least one part of said actuation member and at least one part of said means for transforming the rotary motion of said rotor (r) into a linear motion of said actuation member form a spindle drive comprising a spindle nut (m) and a spindle (sp), and
wherein said means for transforming the rotary motion of said rotor (r) into a linear motion of said actuation member are configured, such that the rotary motion of said rotor (r) is transferred to said spindle drive.

3. Disk brake according to claim 1 or 2,
wherein said means for transforming the rotary motion of said rotor (r) into a linear motion of said actuation member comprise a spur gear unit.

4. Disk brake according to claim 2 or 3,
wherein said means for transforming the rotary motion of said rotor (r) into a linear motion of said actuation member comprise a rotor gear wheel (zr), wherein the rotor gear wheel is affixed to the rotor (r),
wherein said means for transforming the rotary motion of said rotor (r) into a linear motion of said actuation member comprise at least a first intermediate gear wheel (z1) and a second intermediate gear wheel (z2),
wherein said first intermediate gear wheel (z1) and said second intermediate gear wheel (z2) are positioned on the same intermediate shaft (zw),
wherein said first intermediate gear wheel (z1) has a larger outer diameter than said second intermediate gear wheel (z2) and engages said rotor gear wheel (zr), and
wherein said second intermediate gear wheel (z2) is in slaving communication with the spindle drive.

5. Disk brake according to any one of the preceding claims,
wherein said means for transforming the rotary motion of said rotor (r) into a linear motion of said actuation member comprise at least one ratchet wheel having at least one recess, wherein said recess is spaced from the axle of said ratchet wheel in a finite distance,
wherein said means for transforming the rotary motion of said rotor (r) into a linear motion of said actuation member are configured, such that a locking of said ratchet wheel causes a stop of said actuation member relative to said floating calliper (s),
wherein the disk brake further comprises a fixing brake assembly comprising an actuation mechanism and an actuator (a) for actuating said actuation mechanism, and
wherein said actuation mechanism is configured, such that it engages said recess of said ratchet wheel for mechanical locking.

6. Disk brake according to claim 5 and one of claims 3 or 4,
wherein said ratchet wheel is a gear wheel of said spur gear unit, and
wherein said recess of said ratchet wheel is formed by two adjacent teeth of said gear wheel.

7. Disk brake according to claim 6,
wherein said disk brake is configured, such that, when said electric motor is switched off and said fixing brake assembly is not actuated, said actuation member is displaced from a position, wherein said actuation member is positioned in case of a strong breaking action, into a position, wherein said actuation member is positioned in case of a weaker or no breaking action, such that said gear wheel rotates in a first rotational direction during said displacement of said actuation member,
wherein said actuation mechanism of said fixing brake assembly comprises a pivotally supported detent pawl (sk) for engagement between the teeth of said gear wheel, and
wherein said detent pawl (sk) is positioned relative to said gear wheel, such that said first rotational direction of said gear wheel is opposite to the rotational direction of said detent pawl (sk) for locking said gear wheel.

8. Disk brake according to any one of the preceding claims,
wherein a first part of said rotor (r) is mounted coaxially around said calliper guiding pin,
wherein a second part of said rotor (r) is positioned axially displaced with respect to said calliper guiding pin,
wherein the outer diameter of said second part of said rotor (r) is smaller than the outer diameter of said first part of said rotor (r),
wherein said means for transforming the rotary motion of said rotor (r) into a linear motion of said actuation member comprise a rotor gear wheel (zr) affixed to said second part of said rotor (r), and
wherein said outer diameter of said rotor gear wheel (zr) is smaller than the outer diameter of said first part of said rotor (r).

9. Disk brake according to claim 8,
wherein said support (h) comprises a further calliper guiding pin (f2), wherein the axial length of said further calliper guiding pin approximately corresponds to the sum of the axial length of said calliper guiding pin and the axial length of said second part of said rotor (r).

10. Disk brake according to any one of the preceding claims,
wherein said rotor (r') is mounted along its entire axial length about said calliper guiding pin (f1').

11. Disk brake according to any one of the preceding claims,
wherein the disk brake further comprises a further calliper guiding pin (f2") and a further actuation unit, wherein said further actuation unit is positioned at said floating calliper (s''),
wherein said further actuation unit comprises a further electric motor and an actuation member for displacing the brake pad relative to the floating calliper (s'') and said further actuation unit is configured analogously to said actuation unit, and
wherein said rotor (R") of said further electric motor is mounted at least partially coaxially about said further calliper guiding pin (f2").

12. Disk brake according to claim 11,
wherein said actuation member and said further actuation member are located between said calliper guiding pin (f1'') and said further calliper guiding pin (f2"), and
wherein the disk brake is configured substantially symmetrically about a plane between said actuation member and said further actuation member.

13. Disk brake according to any one of the preceding claims,
wherein sensor means, said electric motor, said means for transforming the rotary motion of said rotor (r) into a linear motion of said actuation member and a control unit are mounted on a top (d), wherein the top (d) is mounted to the floating calliper (s).

## Revendications

1. Frein à disque à commande électromécanique
- avec un étrier flottant (s) et un support (h), qui comprend au moins un axe de guidage de l'étrier (f1) le long duquel l'étrier flottant (s) est monté de manière coulissante et
- avec une unité d'actionnement qui est disposée sur l'étrier flottant (s),
- l'unité d'actionnement comprenant un moteur électrique avec un rotor (r), un élément d'actionnement pour déplacer une plaquette de frein (bb1) par rapport à l'étrier flottant (s) et un moyen pour convertir le mouvement de rotation du rotor (r) en un mouvement linéaire de l'élément d'actionnement par rapport à l'étrier flottant (s) et
- au moins une zone partielle axiale du rotor (r) du moteur électrique étant placée en position coaxiale autour de l'axe de guidage de l'étrier (f1).

2. Frein à disque selon la revendication 1,
- dans lequel au moins une partie de l'élément d'actionnement et une partie du moyen pour convertir le mouvement de rotation du rotor (r) en un mouvement linéaire de l'élément d'actionnement forment un réducteur à broche comprenant un écrou de broche (m) et une broche (sp) et
- dans lequel le moyen pour convertir le mouvement de rotation du rotor (r) en un mouvement linéaire de l'élément d'actionnement est conçu de telle façon que le mouvement de rotation du rotor (r) soit transmis sur le réducteur à broche.

3. Frein à disque selon la revendication 1 ou 2,
- dans lequel le moyen pour convertir le mouvement de rotation du rotor (r) en un mouvement linéaire de l'élément d'actionnement comprend un réducteur à denture droite.

4. Frein à disque selon les revendications 2 et 3,
- dans lequel le moyen pour convertir le mouvement de rotation du rotor (r) en un mouvement linéaire de l'élément d'actionnement comprend une roue dentée de rotor (zr) qui est fixée sur le rotor (r),
- dans lequel le moyen pour convertir le mouvement de rotation du rotor (r) en un mouvement linéaire de l'élément d'actionnement comprend au moins une première roue dentée intermédiaire (z1) et une deuxième roue dentée intermédiaire (z2),
- dans lequel la première roue dentée intermédiaire (z1) et la deuxième roue dentée intermédiaire (z2) sont disposées sur le même arbre intermédiaire (zw),
- dans lequel la première roue dentée intermédiaire (z1) a un diamètre extérieur plus important que la deuxième roue dentée intermédiaire (z2) et engrène la roue dentée du rotor (zr) et
- dans lequel la deuxième roue dentée intermédiaire (z2) est en liaison d'entraînement avec le réducteur à broche.

5. Frein à disque selon l'une quelconque des revendications 1 à 4,
- dans lequel le moyen pour convertir le mouvement de rotation du rotor (r) en un mouvement linéaire de l'élément d'actionnement comprend au moins une roue de blocage avec au moins un évidement qui est disposé avec un espacement limité par rapport à l'axe de la roue de blocage,
- dans lequel le moyen pour convertir le mouvement de rotation du rotor (r) en un mouvement linéaire de l'élément d'actionnement est conçu de telle façon qu'un verrouillage de la roue de blocage a pour conséquence un arrêt de l'élément d'actionnement par, rapport à l'étrier flottant (s),
- avec une installation de freinage d'immobilisation qui comprend un mécanisme d'actionnement et un déclencheur (a) pour déclencher le mécanisme d'actionnement,
- dans laquelle le mécanisme d'actionnement est conçu de telle manière que, pour le verrouillage mécanique de la roue de blocage, il engrène dans l'évidement de la roue de blocage.

6. Frein à disque selon la revendication 5 et l'une quelconque des revendications 3 ou 4
- dans lequel la roue de blocage est une roue dentée du réducteur à roues droites et
- dans lequel l'évidement de la roue de blocage est formé par deux dents voisines l'une de l'autre de la roue dentée.

7. Frein à disque selon la revendication 6,
- qui est conçu de telle façon que l'élément d'actionnement, en partant d'une position que prend. l'élément d'actionnement en cas de fort freinage, se déplace, lorsque le moteur électrique est arrêté et lorsque l'installation de freinage d'immobilisation n'est pas déclenchée, dans une position que prend l'élément d'actionnement lors d'un freinage peu important ou en l'absence de freinage, de sorte que, lors du déplacement susmentionné de l'élément d'actionnement, la roue dentée tourne dans un premier sens de rotation,
- dans lequel le mécanisme d'actionnement de l'installation de freinage d'immobilisation comprend un cliquet de blocage (sk) logé de manière tournante, qui engrène les dents de la roue dentée et
- dans lequel le cliquet de blocage (sk) est disposé de telle manière par rapport à la roue dentée que le premier sens de rotation de la roue dentée est contraire au sens de rotation du cliquet de blocage (sk) servant à bloquer la roue dentée.

8. Frein à disque selon l'une quelconque des revendications 1 à 7,
- dans lequel une première partie du rotor (r) est disposée de manière coaxiale autour de l'axe de guidage de l'étrier,
- dans lequel une deuxième partie du rotor (r) est disposée avec un décalage axial par rapport à l'axe de guidage de l'étrier,
- dans lequel le diamètre extérieur de la deuxième partie du rotor (r) est moins important que le diamètre extérieur de la première partie du rotor (r),
- dans lequel le moyen pour convertir le mouvement de rotation du rotor (r) en un mouvement linéaire de l'élément d'actionnement comprend une roue dentée de rotor (zr) qui est fixée sur la deuxième partie du rotor (r) et
- dans lequel le diamètre extérieur de la roue dentée du rotor (zr) est moins important que le diamètre extérieur de la première partie du rotor (r).

9. Frein à disque selon la revendication 8,
- dans lequel le support (h) comprend un autre axe de guidage de l'étrier (f2) dont la longueur axiale correspond à peu près à la somme de la longueur axiale de l'axe de guidage de l'étrier et de la longueur axiale de la deuxième partie du rotor (r).

10. Frein à disque selon l'une quelconque des revendications 1 à 9,
- dans lequel le rotor (r') est, sur la totalité de sa longueur axiale, disposé de manière coaxiale autour de l'axe de guidage de l'étrier (f1').

11. Frein à disque selon l'une quelconque des revendications 1 à 10,
- avec un autre axe de guidage de l'étrier (f2'') et une autre unité d'actionnement qui est disposée sur l'étrier flottant (s''),
- l'autre unité d'actionnement comprenant un autre moteur électrique et un élément d'actionnement pour le déplacement de la plaquette de frein par rapport à l'étrier flottant (s'') et est conçue de manière analogue à l'unité d'actionnement et
- le rotor (R'') de l'autre moteur électrique étant placé au moins partiellement de manière coaxiale autour de l'autre axe de guidage de l'étrier (f2'').

12. Frein à disque selon la revendication 11,
- dans lequel l'élément d'actionnement et l'autre élément d'actionnement sont disposés entre l'axe de guidage de l'étrier (f1'') et l'autre axe de guidage de l'étrier (f2'') et
- dans lequel le frein à disque est construit de manière sensiblement symétrique sur un plan qui s'étend entre l'élément d'actionnement et l'autre élément d'actionnement.

13. Frein à disque selon l'une quelconque des revendications 1 à 12,
- dans lequel un système de capteurs, le moteur électrique, le moyen pour convertir le mouvement de rotation du rotor (r) en un mouvement linéaire de l'élément d'actionnement et une unité de régulation sont montés sur un couvercle (d) et
- dans lequel le couvercle (d) est monté sur l'étrier flottant (s).
